# FASCICULE DE BREVET EUROPEEN

(11) **EP 3 588 827 B1**
(45) Date de publication et mention de la délivrance du brevet: **28.04.2021**
(21) Numéro de dépôt: 19181980.4
(22) Date de dépôt: 24.06.2019
(51) Int. Cl.: H04L 1/16

(54) **PROCÉDÉ D'ACQUITTEMENT RAPIDE D'UNE TRAME**
SCHNELLES VERFAHREN ZUR BESTÄTIGUNG EINES FRAMES
METHOD FOR QUICK ACKNOWLEDGEMENT OF A FRAME

(30) Priorité: 27.06.2018 FR 1855800
(43) Date de publication de la demande: 01.01.2020
(73) Titulaire: SAGEMCOM ENERGY & TELECOM SAS, 92500 Rueil-Malmaison (FR)
(72) Inventeur: LECOCQ, Guillaume, 92500 Rueil Malmaison (FR)
(74) Mandataire: Cabinet Le Guen Maillet

(56) Documents cités:
- US-A1- 2011 064 223
- US-A1- 2018 049 027
- YANG XUEYING ET AL: "Security Vulnerabilities in LoRaWAN", 2018 IEEE/ACM THIRD INTERNATIONAL CONFERENCE ON INTERNET-OF-THINGS DESIGN AND IMPLEMENTATION (IOTDI), IEEE, 17 avril 2018 (2018-04-17), pages 129-140, XP033350844, DOI: 10.1109/IOTDI.2018.00022

## Description

La présente invention concerne le domaine des réseaux de communications sans fil. La présente invention concerne plus particulièrement le domaine des réseaux étendus à longue portée (« LoRaWan » en anglais, pour « Range Wide-area network ») et un procédé d'acquittement rapide de trames.

Un réseau de communication étendu à longue portée (ci-après « réseau ») est typiquement un réseau permettant une communication à bas débit, par radio, d'objets à faible consommation électrique communiquant par exemple selon un protocole dit LoRaWan et connectés à l'Internet via des passerelles, participant ainsi à ce qui est appelé l'Internet des objets. Le protocole LoRaWan définit un protocole de communication pour l'Internet des objets qui utilise une technique de modulation propre. Ce protocole LoRaWan se veut simple, peu coûteux à implémenter et économe en énergie plutôt que permettant des débits élevés. L'avantage d'un réseau de type LoRaWan est de permettre des communications longues portées à bas coût et basse consommation.

Un réseau LoRaWan est ainsi constitué d'objets sans-fils basse consommation qui communiquent avec des serveurs applicatifs au travers de passerelles. Les communications entre les objets sans-fil et les passerelles s'effectuent par ondes radio conformément au protocole LoRaWan. La communication entre les passerelles et les serveurs applicatifs est établie typiquement via un protocole IP (« Internet Protocole »), par exemple au moyen d'un réseau de collecte utilisant une technologie Ethernet.

Un réseau LoRaWan utilise typiquement des bandes de fréquences dites ISM (pour « Industriel, Scientifique et Médical »), typiquement autour de 868 MHz en Europe et 915 MHz en Amérique du Nord. L'utilisation des bandes ISM en Europe impose le respect d'un temps de parole limité sur certaines bandes de fréquences. Cette limitation prend la forme d'une contrainte appelée « rapport cyclique » (ou « dutty cycle » en anglais). Cette contrainte définit un ratio maximal, pour une bande de fréquence, entre un temps pendant lequel un dispositif électronique émet des données sur cette bande de fréquence et une période de temps prédéterminée. Pour un réseau LoRaWan ce rapport cyclique est calculé sur une heure glissante et est exprimé en pourcentage. Ainsi, un dispositif électronique connecté à un réseau LoRaWan peut devoir respecter un rapport cyclique d'une valeur typique de un pourcent, ce qui veut alors dire que ce dispositif électronique ne peut pas émettre de données pendant plus de 36 secondes durant les 3600 dernières secondes.

De manière plus globale, dans un réseau LoRaWan, il est avantageux de réduire au mieux les durées d'émission des dispositifs électroniques connectés afin de préserver la ressource partagée en bande passante, mais aussi de réduire au maximum les consommations en énergie des dispositifs électroniques.

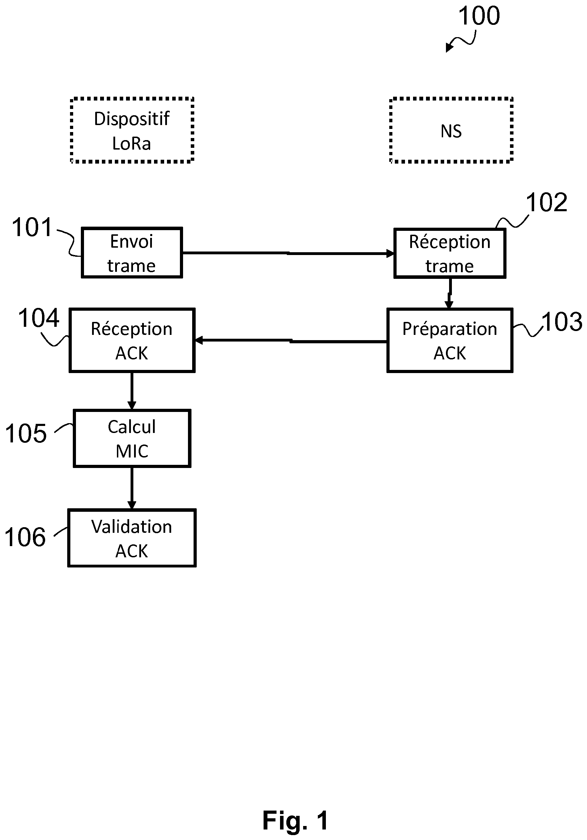

La **Fig.1** est une illustration schématique d'un échange de trame entre un dispositif électronique connecté à un réseau LoRaWan et un serveur applicatif (désigné par « NS » dans la Fig. 1) du réseau LoRaWan. Le dispositif électronique peut être un objet connecté ou tout dispositif électronique utilisant le protocole LoRaWan. Le serveur applicatif peut fournir des services de diverses natures aux objets connectés au réseau LoRaWan. Les trames échangées entre le dispositif électronique et le serveur applicatif transitent via une passerelle du réseau LoRaWan.

Dans une étape 101, le dispositif électronique détermine une trame à envoyer au serveur applicatif, et envoie cette trame audit serveur applicatif.

La structure de la trame est par exemple conforme aux spécifications LoRaWan version 1.1 publiées en octobre 2017 par « LoRa Alliance, Inc. », et plus particulièrement aux spécifications du chapitre 4 « MAC Message Formats ». En particulier, cette trame comprend une charge utile (« payload » en anglais) au niveau de la couche physique comprenant :
- un en-tête de champs MAC (pour « Media Access Control » en anglais), ci-après MHDR (pour « MAC Header » en anglais),
- des données transportées par la trame, ci-après « MACpayload »,
- un code d'intégrité de la charge utile de la couche physique, ci-après MIC (pour « Message Integrity Code » en anglais), tel que par exemple défini dans le chapitre 4.4 de la norme LoRaWan version 1.1 précédemment citée.

Cette trame est envoyée via une passerelle du réseau LoRaWan au serveur applicatif.

Dans une étape 102, le serveur applicatif reçoit ladite trame émise par le dispositif électronique. Le protocole LoRaWan peut prévoir, ou non, un mécanisme d'acquittement des trames reçues. Si aucun acquittement n'est nécessaire, le procédé d'échange de trames entre le dispositif électronique et le serveur applicatif peut prendre fin ici. L'échange de données entre le dispositif électronique et le serveur applicatif peut aussi se poursuivre, le serveur applicatif envoyant en retour une trame comprenant des données. Cette dernière trame est une trame de données et non d'acquittement.

Dans le cas contraire, dans une étape 103, le serveur applicatif prépare une trame d'acquittement. La trame d'acquittement est déterminée en fonction de la trame reçue, et comprend de manière identique à ce qui a précédemment été décrit, pour le niveau de la couche physique, un en-tête de champs « MHDR », une charge utile « MACpayload » et un code d'intégrité « MIC ».

Cette trame d'acquittement est envoyée par le serveur applicatif vers le dispositif électronique, toujours via une passerelle du réseau LoRaWan.

Dans une étape 104, le dispositif électronique reçoit la trame d'acquittement et en extrait au moins les données des trois champs MHDR, MACpayload et MIC.

Dans une étape 105, le dispositif électronique détermine, en fonction des données des champs MHDR et MACpayload, un code d'intégrité. Dit autrement, le dispositif électronique détermine par le calcul et en fonction des données des champs MHDR et MACpayload, un code d'intégrité correspondant.

Dans une étape 106, le dispositif électronique compare le code d'intégrité déterminé lors de l'étape précédente 105 avec le code d'intégrité MIC reçu lors de l'étape 104. Si les deux codes sont bien égaux, alors le dispositif électronique valide le bon acquittement de la trame par le serveur applicatif. Si les deux codes ne correspondent pas, alors l'acquittement n'est pas validé. Cela signifie que des données des trames échangées ont été corrompues. Le dispositif électronique peut recommencer le procédé à l'étape 101.

Ce procédé d'acquittement permet de s'assurer de la bonne réception de trames échangées entre un dispositif électronique et un serveur applicatif, mais au prix de l'échange de trames pouvant représenter plusieurs octets entre le dispositif électronique et le serveur applicatif.

Le document US2011/0064223A1 traite d'un procédé pour contrôler un dispositif sans fil distant avec un dispositif utilisateur comprenant un message d'accusé de réception.

Le document US2018/0049027A1 traite d'un procédé de communication sans fil incluant une signature valant accusé de réception d'une communication.

Il est donc nécessaire de proposer un procédé permettant de pallier ces inconvénients, et en particulier de réduire les quantités de données échangées entre le dispositif électronique et le serveur applicatif.

L'invention concerne un procédé, pour un réseau de communication étendu à longue portée comprenant au moins un dispositif électronique et un serveur applicatif, d'acquittement d'une trame émise par le dispositif électronique et reçue par le serveur applicatif, le procédé étant exécuté par le dispositif électronique et comprenant les étapes de :
- émettre, à destination du serveur applicatif une première trame, la première trame comprenant des données,
- déterminer, en fonction des données de la première trame, un premier code d'intégrité,
- recevoir une deuxième trame dite d'acquittement en provenance du serveur applicatif, la trame d'acquittement comprenant un deuxième code d'intégrité,
- si le premier code d'intégrité déterminé par le dispositif électronique et le deuxième code d'intégrité sont égaux, alors valider l'acquittement par le serveur applicatif de la première trame émise par le dispositif électronique.

Selon un mode de réalisation complémentaire de l'invention, déterminer, en fonction des données de la première trame émise, un premier code d'intégrité comprenant les étapes de :
- suite à l'émission de la première trame, incrémenter la valeur d'un compteur associé au nombre de trames émises par le serveur applicatif, et,
- déterminer, en fonction des données de la première trame et de la valeur du compteur, le premier code d'intégrité.

Selon un mode de réalisation complémentaire de l'invention, la deuxième trame reçue comprend en outre un champ comprenant un compteur, l'étape de déterminer le premier code d'intégrité étant exécutée postérieurement à la réception de la deuxième trame, le premier code d'intégrité est déterminé en fonction des données de la première trame et de la valeur du compteur reçue dans la deuxième trame.

L'invention concerne également un dispositif électronique adapté pour être connecté à un réseau de communication étendu à longue portée, le dispositif électronique étant adapté pour exécuter tout ou partie des étapes du procédé décrit dans le présent document.

L'invention concerne également un procédé pour un réseau de communication étendu à longue portée comprenant au moins un dispositif électronique et un serveur applicatif, d'acquittement d'une trame émise par le dispositif électronique et reçue par le serveur applicatif, le procédé étant exécuté par le serveur applicatif et comprenant les étapes de :
- recevoir, en provenance du dispositif électronique, une première trame, la première trame comprenant des données,
- déterminer, en fonction des données de la première trame, un code d'intégrité,
- émettre, à destination du dispositif électronique, une deuxième trame comprenant le code d'intégrité, la deuxième trame ne comprenant pas d'autres données que le code d'intégrité.

L'invention concerne également un serveur applicatif d'un réseau de communication étendu à longue portée, le serveur applicatif étant adapté pour exécuter tout ou partie des étapes du procédé décrit dans le présent document.

L'invention concerne également un système pour un réseau de communication étendu à longue portée, le système comprenant au moins un dispositif électronique et un serveur applicatif tels que décrits dans le présent document.

L'invention concerne également un programme d'ordinateur, qui peut être stocké sur un support et/ou téléchargé d'un réseau de communication, afin d'être lu par un processeur d'un dispositif électronique d'un réseau de communication étendu à longue portée. Ce programme d'ordinateur comprend des instructions pour implémenter tout ou partie des étapes du procédé décrit dans le présent document, lorsque ledit programme est exécuté par le processeur.

L'invention concerne également un medium de stockage d'informations ou support d'enregistrement, lisible ou accessible par un dispositif électronique d'un réseau de communication étendu à longue portée, comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la **Fig. 1** illustre schématiquement un procédé d'échange de trames entre un dispositif électronique connecté à un réseau de communication étendu à longue portée et un serveur applicatif du même réseau,
- la **Fig. 2** illustre schématiquement un procédé d'échange de trames entre un dispositif électronique connecté à un réseau de communication étendu à longue portée et un serveur applicatif du même réseau selon un mode de réalisation de l'invention,
- la **Fig. 3** illustre schématiquement l'architecture matérielle d'un dispositif électronique adapté pour être connecté à un réseau de communication étendu à longue portée, le dispositif électronique étant adapté pour exécuter tout ou partie des étapes du procédé illustré dans la Fig. 2.

L'invention permet de réduire la quantité de données émises lors d'un acquittement d'une trame. L'invention permet ainsi de préserver la bande passante disponible, et de réduire la consommation énergétique des dispositifs électroniques échangeant des données en réduisant la quantité de données émises ou reçues.

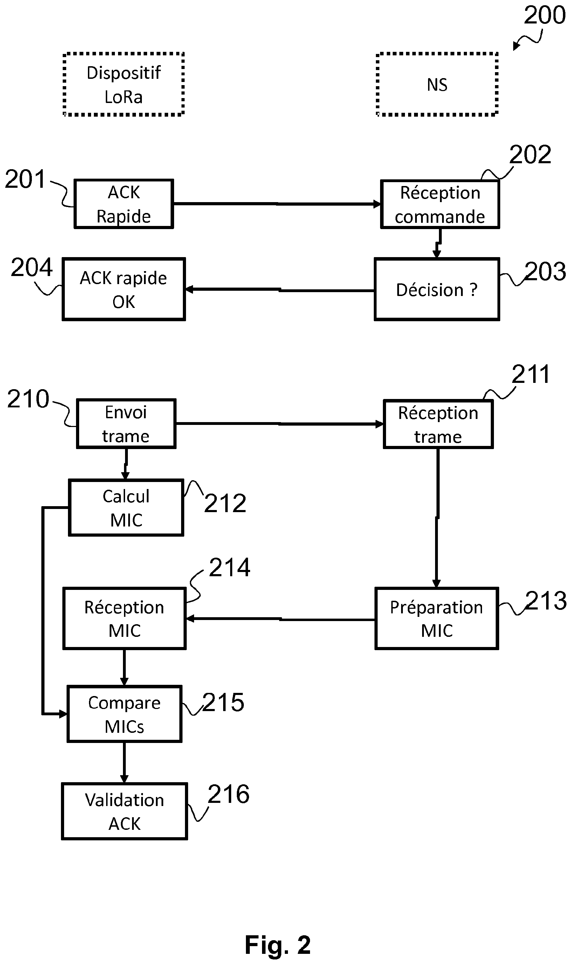

La **Fig. 2** illustre schématiquement un procédé d'échange de trames entre un dispositif électronique connecté à un réseau de communication étendu à longue portée et un serveur applicatif du même réseau selon un mode de réalisation de l'invention.

Par défaut, un dispositif électronique et un serveur applicatif (désigné par « NS » dans la Fig. 2) conformes à une norme LoRaWan ne mettent pas en œuvre le procédé objet de l'invention lors de l'acquittement d'une trame échangée.

Pour cela, dans une première étape 201, le dispositif électronique émet à destination du serveur applicatif une trame comprenant une commande d'activation du procédé d'acquittement objet de la présente invention, ci-après appelé acquittement rapide.

Dans une étape 202, le serveur applicatif reçoit la commande émise par le dispositif électronique. Le serveur applicatif, dans une étape 203, détermine ensuite s'il est en mesure de mettre en œuvre le procédé d'acquittement rapide, et, si oui, émet à destination du dispositif électronique une validation de la bonne prise en compte de la commande. Dans une étape 204, le dispositif électronique reçoit la validation et peut ensuite mettre en œuvre le procédé d'acquittement rapide. Dit autrement, si le serveur applicatif supporte le procédé d'acquittement rapide, une trame de validation est émise vers le dispositif électronique. Dans le cas contraire, la commande d'activation peut être ignorée par le serveur applicatif. Selon le mode de réalisation de l'invention, le serveur applicatif peut décider d'ignorer la commande d'activation, quand bien même ledit serveur applicatif est en mesure de supporter le procédé d'acquittement rapide. Le serveur applicatif peut aussi répondre à une commande d'activation par une trame comprenant d'une part une information sur le support ou non du procédé d'acquittement rapide par le serveur applicatif, et, d'autre part, si le procédé d'acquittement rapide est supporté, une autre information sur l'acceptation ou non de l'activation de l'acquittement rapide.

De manière similaire au procédé d'activation, un procédé correspondant de désactivation de l'acquittement rapide peut être mis en œuvre par le dispositif électronique et le serveur applicatif. Le procédé de désactivation diffère par la nature de la commande envoyée, la commande correspondant à une demande de désactivation de l'acquittement rapide.

Le dispositif électronique peut décider de mettre en œuvre le procédé d'acquittement rapide afin de préserver la bande passante disponible. Toutefois, si, comme décrit ci-après, le dispositif électronique constate un nombre prédéterminé d'échecs d'acquittements de trames, le dispositif électronique peut émettre une commande de désactivation du procédé d'acquittement rapide.

Si le procédé d'acquittement rapide a été activé sur le dispositif électronique et le serveur applicatif, alors, les premières étapes 210 et 211 d'émission d'une trame sont identiques aux étapes 101 et 102 du procédé connues. L'étape 213 de préparation et envoi de la trame de réponse envoyée par le serveur applicatif en retour diffère de l'étape 103. En effet, le serveur applicatif prépare une trame d'acquittement. La trame d'acquittement est déterminée en fonction de la trame reçue. Le serveur applicatif détermine de manière identique à ce qui a précédemment été décrit, pour le niveau de la couche physique, un en-tête de champs « MHDR » et une charge utile « MACpayload », puis détermine en fonction des deux champs précédents un code d'intégrité « MIC ». Cependant, et contrairement à ce qui a été illustré dans la Fig. 1, le serveur applicatif émet, dans cette étape 213, à destination du dispositif électronique, une deuxième trame comprenant le code d'intégrité, la deuxième trame ne comprenant pas d'autres données que le code d'intégrité. Dit autrement, le serveur applicatif émet une trame vers le dispositif électronique ne comprenant que le seul code d'intégrité MIC. Les champs MHDR et MACpayload ne sont pas compris dans la trame émise. La taille de la trame est ainsi significativement réduite. Ce procédé peut permettre de réduire la taille d'une trame d'acquittement de 12 octets (champs MHDR, MACpayload et MIC) à seulement 4 octets (MIC seul).

Il est à noter que le serveur applicatif peut répondre à une trame envoyée par le dispositif électronique par une trame comprenant à la fois un acquittement de la trame envoyée par le dispositif électronique et des données à destination du dispositif électronique. Dans ce cas, le procédé d'acquittement rapide n'est pas mis en œuvre, le serveur applicatif émettant une trame comprenant un acquittement et les données à destination du dispositif électronique, le code d'intégrité étant déterminé sur la globalité des données émises, y compris l'acquittement.

Dans une étape 212, le dispositif électronique détermine, de façon similaire au serveur applicatif, l'en-tête de champs « MHDR » et la charge utile « MACpayload » qui correspondrait à la trame d'acquittement classique que devrait émettre le serveur applicatif. Le dispositif électronique peut déterminer, à partir de ces informations, un code d'intégrité MIC attendu pour une trame classique d'acquittement. Le dispositif électronique peut déterminer de son côté le contenu de la trame d'acquittement car ce contenu est directement déductible à partir du contenu de la trame reçue lors de l'étape 211 par le serveur applicatif. Le dispositif électronique peut aussi anticiper et modifier certains champs de la trame prédéterminés en fonction du sens d'émission de la trame (sens montant ou bien sens descendant). Le dispositif électronique peut donc déterminer de façon parallèle au serveur applicatif la trame d'acquittement attendue, et en déduire un code d'intégrité correspondant.

Dans une étape 214, le dispositif électronique reçoit la trame d'acquittement rapide émise par le serveur applicatif lors de l'étape 213, cette trame d'acquittement rapide ne comprenant que le code d'intégrité déterminé par le serveur applicatif.

Dans le cas où le serveur applicatif, lors de l'étape 213, a émis une trame comprenant en plus de l'acquittement, des données à destination du dispositif électronique, alors le dispositif électronique n'exécute pas les étapes suivantes 215 et 216, mais détermine de façon classique un code d'intégrité en fonction des données reçues et compare ce code d'intégrité avec le code d'intégrité reçu.

Le dispositif électronique peut différencier une trame d'acquittement rapide d'une trame classique, comprenant acquittement et données, en fonction de la taille de la trame reçue. Une trame d'acquittement rapide comprend typiquement quatre octets alors qu'une trame complète comprend plus de quatre octets.

Dans une étape 215, le dispositif électronique compare le code d'intégrité reçu lors de l'étape 214 et celui déterminé localement lors de l'étape 212. Si les deux codes d'intégrité sont identiques, alors l'acquittement de la trame est validé. Sinon, l'acquittement échoue. Le dispositif électronique peut alors recommencer le procédé à partir de l'étape 210.

La trame émise par le serveur applicatif peut comprendre un compteur, dit compteur descendant. Ce compteur descendant est incrémenté par le serveur applicatif à chaque émission d'une trame vers le dispositif électronique. De même, un compteur dit ascendant peut mis en place pour les trames envoyées par le dispositif électronique vers le serveur applicatif.

Si un compteur descendant est normalement intégré dans chaque trame émise par le serveur applicatif vers le dispositif électronique, alors le dispositif électronique peut enregistrer la valeur de ce compteur et déterminer localement une valeur attendue du compteur descendant. Ainsi, le dispositif électronique peut déterminer une valeur attendue du compteur ascendant et déterminer le code d'intégrité attendu de la trame d'acquittement rapide.

Toutefois, ce mécanisme peut être pris en défaut si une trame descendante est perdue, le compteur descendant local du dispositif électronique n'étant alors plus synchronisé avec le compteur descendant du serveur applicatif.

Le procédé d'acquittement rapide peut alors être modifié selon un mode de réalisation complémentaire. Dans ce mode de réalisation complémentaire, le serveur applicatif intègre la valeur du compteur descendant dans la trame d'acquittement rapide. Dans ce cas, le dispositif électronique doit d'abord recevoir la trame d'acquittement rapide et extraire la valeur du compteur descendant avant de pouvoir exécuter l'étape 212 de détermination locale du code d'intégrité, la valeur correcte du compteur descendant étant nécessaire à la détermination du code d'intégrité.

Selon un mode de réalisation de l'invention, le procédé d'acquittement de trames entre le dispositif électronique et le serveur applicatif peut donc prendre trois formes :
- procédé d'acquittement classique, tel que décrit dans la norme LoRaWan,
- procédé d'acquittement rapide, la trame d'acquittement ne comprenant que le code d'intégrité,
- procédé d'acquittement rapide avec synchronisation, la trame d'acquittement comprenant le code d'intégrité et le compteur descendant.

Le dispositif électronique ou le serveur applicatif peut déterminer quel procédé d'acquittement utiliser (classique, acquittement rapide avec/sans synchronisation) selon le taux d'échec de la validation des trames émises ou un besoin en réduction de la bande passante utilisée sur une bande de fréquence.

Le dispositif électronique peut décider de passer d'un procédé d'acquittement classique à un procédé d'acquittement rapide avec/sans synchronisation, après un nombre prédéterminé d'acquittements validés. Inversement, partant d'un procédé d'acquittement rapide sans synchronisation, le dispositif électronique peut décider de revenir à un procédé d'acquittement rapide avec synchronisation, voire à un acquittement classique, suite à un nombre prédéterminé d'échecs de la validation des acquittements de trames, possiblement sur une fenêtre glissante des dernières trames émises. Par exemple, déterminer que 10 trames n'ont pas été acquittées sur les 30 dernières trames émises peut déclencher cette bascule vers un acquittement rapide avec synchronisation ou un acquittement classique. L'acquittement rapide avec synchronisation peut aussi être demandé par un dispositif électronique recevant une succession de trames d'acquittement rapide, ces trames n'étant pas considérées valides par le dispositif électronique. Ainsi, après un nombre prédéterminé d'échecs de la validation de trames d'acquittement rapide, un dispositif électronique peut demander à basculer vers un procédé d'acquittement rapide avec synchronisation.

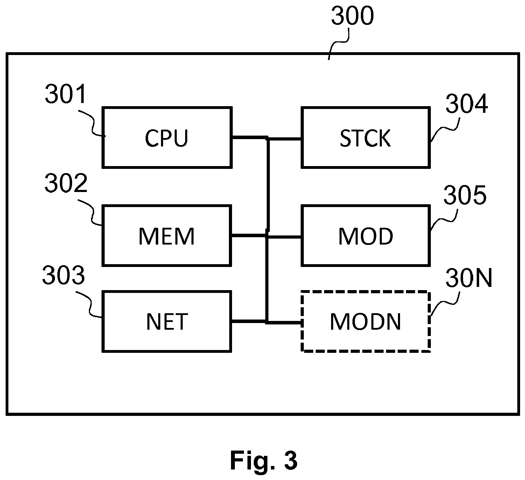

La **Fig. 3** illustre schématiquement l'architecture matérielle d'un dispositif électronique 300 adapté pour être connecté à un réseau de communication étendu à longue portée, le dispositif électronique étant adapté pour exécuter tout ou partie des étapes du procédé 200 illustré dans la Fig. 2.

Ainsi, le dispositif électronique 300 comprend, reliés par un bus de communication : un processeur ou CPU (« *Central Processing Unit* » en anglais) 301 ; une mémoire MEM 302 de type RAM (« *Random Access Memory* » en anglais) et/ou ROM (« *Read Only Memory* » en anglais), un module radiofréquence NET 303, par exemple conforme à une norme LoRaWan, un module de stockage STCK 304 de type stockage interne et possiblement une pluralité de modules fonctionnels 405 à 40N. Le module de stockage STCK 304 peut être de type disque dur HDD (« *Hard Disk Drive »* en anglais) ou SSD (« *Solid-State Drive* » en anglais), ou de type lecteur de support de stockage externe, tel un lecteur de cartes SD (« *Secure Digital* » en anglais). Le processeur CPU 301 peut enregistrer des données, ou informations, dans la mémoire MEM 302 ou dans le module de stockage STCK 304. Le processeur CPU 301 peut lire des données enregistrées dans la mémoire MEM 302 ou dans le module de stockage STCK 304. Ces données peuvent correspondre à des paramètres de configuration. Le module radiofréquence NET 303 permet typiquement la connexion du dispositif électronique 300 à un réseau de communication étendu à longue portée de type LoRaWan. Les modules fonctionnels 305 à 30N peuvent être de natures diverses et permettent d'apporter des fonctionnalités au dispositif électronique 300. Un module fonctionnel 305 à 30N peut être une caméra de surveillance, un récepteur d'un système de géolocalisation par satellites, un capteur météorologique, etc.

Le processeur CPU 301 est capable d'exécuter des instructions chargées dans la mémoire MEM 302, par exemple à partir du module de stockage STCK 304. Lorsque le dispositif électronique 400 est mis sous tension, le processeur CPU 301 est capable de lire de la mémoire MEM 302 des instructions et de les exécuter. Ces instructions forment un programme d'ordinateur causant la mise en œuvre, par le processeur CPU 301, de tout ou partie des procédés et étapes décrits ci-avant, particulièrement le procédé décrit dans la Fig. 2. Ainsi, tout ou partie des procédés et étapes décrits ci-avant peut être implémenté sous forme logicielle par exécution d'un ensemble d'instructions par une machine programmable, telle qu'un DSP (« *Digital Signal Processor »* en anglais) ou un microcontrôleur. Tout ou partie des procédés et étapes décrits ici peuvent aussi être implémentés sous forme matérielle par une machine ou un composant dédié, tel qu'un FPGA (« *Field-Programmable Gate Array »* en anglais) ou un ASIC (« *Application-Specific Integrated Circuit »* en anglais).

## Revendications

1. Procédé (200), pour un réseau de communication étendu à longue portée comprenant au moins un dispositif électronique et un serveur applicatif, d'acquittement d'une trame émise par le dispositif électronique et reçue par le serveur applicatif, le procédé étant exécuté par le dispositif électronique et étant **caractérisé en ce qu'**il comprend les étapes de :
- émettre (210), à destination du serveur applicatif une première trame, la première trame comprenant des données,
- recevoir (214) une deuxième trame dite d'acquittement en provenance du serveur applicatif, la trame d'acquittement comprenant un deuxième code d'intégrité, la deuxième trame reçue comprenant en outre un champ comprenant un compteur dit compteur descendant,
- déterminer (212), en fonction des données de la première trame, un premier code d'intégrité, le premier code d'intégrité étant déterminé en fonction des données de la première trame et de la valeur du compteur descendant reçue dans la deuxième trame,
- si le premier code d'intégrité déterminé par le dispositif électronique et le deuxième code d'intégrité sont égaux (215), alors valider (216) l'acquittement par le serveur applicatif de la première trame émise par le dispositif électronique.

2. Procédé selon la revendication 1, l'étape de déterminer, en fonction des données de la première trame émise, un premier code d'intégrité comprenant les étapes de :
- suite à l'émission de la première trame, incrémenter la valeur d'un compteur descendant local associé au nombre de trames émises par le serveur applicatif pour déterminer localement une valeur attendue du compteur descendant, et,
- déterminer, en fonction des données de la première trame et de la valeur du compteur descendant local, le premier code d'intégrité.

3. Dispositif électronique (300) adapté pour être connecté à un réseau de communication étendu à longue portée, le dispositif électronique étant **caractérisé en ce qu'**il est adapté pour exécuter les étapes d'un procédé selon l'une quelconque des revendications précédentes.

4. Procédé (200) pour un réseau de communication étendu à longue portée comprenant au moins un dispositif électronique et un serveur applicatif, d'acquittement d'une trame émise par le dispositif électronique et reçue par le serveur applicatif, le procédé étant exécuté par le serveur applicatif et étant **caractérisé en ce qu'**il comprend les étapes de :
- recevoir (211), en provenance du dispositif électronique, une première trame, la première trame comprenant des données,
- émettre (214) une deuxième trame dite d'acquittement en provenance du serveur applicatif, la trame d'acquittement comprenant un deuxième code d'intégrité, la deuxième trame comprenant en outre un champ comprenant un compteur dit compteur descendant,
- déterminer (212), en fonction des données de la première trame, un code d'intégrité, le code d'intégrité étant déterminé en fonction des données de la première trame et de la valeur du compteur descendant dans la deuxième trame,

5. Serveur applicatif d'un réseau de communication étendu à longue portée, le serveur applicatif étant **caractérisé en ce qu'**il est adapté pour exécuter les étapes du procédé selon la revendication précédente.

6. Système pour un réseau de communication étendu à longue portée, le système comprenant au moins un dispositif électronique selon la revendication 4 et un serveur applicatif selon la revendication 5.

7. Programme d'ordinateur, **caractérisé en ce qu'**il comprend des instructions pour mettre en œuvre, par un processeur (301) d'un dispositif électronique (300) d'un réseau de communication étendu à longue portée, un procédé (200) selon l'une quelconque des revendications 1 à 2, lorsque le programme d'ordinateur est exécuté par le processeur.

8. Support d'enregistrement, lisible par un dispositif électronique (300) d'un réseau de communication étendu à longue portée, sur lequel est stocké le programme d'ordinateur selon la revendication précédente.

## Patentansprüche

1. Verfahren (200), für ein mindestens eine elektronische Vorrichtung und einen Anwendungsserver enthaltendes weitreichendes Weitverkehrskommunikationsnetz, zur Bestätigung eines Frames, der von der elektronischen Vorrichtung gesendet und vom Anwendungsserver empfangen wird, wobei das Verfahren von der elektronischen Vorrichtung ausgeführt wird und **dadurch gekennzeichnet ist, dass** es die folgenden Schritte enthält:
- Senden (210) eines ersten Frames an den Anwendungsserver, wobei der erste Frame Daten enthält,
- Empfang (214) eines vom Anwendungsserver kommenden Bestätigungsframe genannten zweiten Frames, wobei der Bestätigungsframe einen zweiten Integritätscode enthält, wobei der empfangene zweite Frame außerdem ein Feld enthält, das einen Abwärtszähler genannten Zähler enthält,
- Bestimmen (212) eines ersten Integritätscodes abhängig von den Daten des ersten Frames, wobei der erste Integritätscode abhängig von den Daten des ersten Frames und vom im zweiten Frame empfangenen Wert des Abwärtszählers bestimmt wird,
- wenn der von der elektronischen Vorrichtung bestimmte erste Integritätscode und der zweite Integritätscode gleich sind (215), Validieren (216) der Bestätigung des von der elektronischen Vorrichtung gesendeten ersten Frames durch den Anwendungsserver.

2. Verfahren nach Anspruch 1, wobei der Schritt der Bestimmung eines ersten Integritätscodes abhängig von den Daten des ersten gesendeten Frames die folgenden Schritte enthält:
- nach dem Senden des ersten Frames, Inkrementieren des Werts eines der vom Anwendungsserver gesendeten Anzahl von Frames zugeordneten lokalen Abwärtszählers, um lokal einen erwarteten Wert des Abwärtszählers zu bestimmen, und
- Bestimmen des ersten Integritätscodes abhängig von den Daten des ersten Frames und vom Wert des lokalen Abwärtszählers.

3. Elektronische Vorrichtung (300), die geeignet ist, mit einem weitreichenden Weitverkehrskommunikationsnetz verbunden zu werden, wobei die elektronische Vorrichtung **dadurch gekennzeichnet ist, dass** sie geeignet ist, die Schritte eines Verfahrens nach einem der vorhergehenden Ansprüche auszuführen.

4. Verfahren (200), für ein mindestens eine elektronische Vorrichtung und einen Anwendungsserver enthaltendes weitreichendes Weitverkehrskommunikationsnetz, zur Bestätigung eines Frames, der von der elektronischen Vorrichtung gesendet und vom Anwendungsserver empfangen wird, wobei das Verfahren vom Anwendungsserver ausgeführt wird und **dadurch gekennzeichnet ist, dass** es die folgenden Schritte enthält:
- Empfang (211) eines von der elektronischen Vorrichtung kommenden ersten Frames, wobei der erste Frame Daten enthält,
- Senden (214) eines vom Anwendungsserver kommenden Bestätigungsframe genannten zweiten Frames, wobei der Bestätigungsframe einen zweiten Integritätscode enthält, wobei der zweite Frame außerdem ein einen Abwärtszähler genannten Zähler enthaltendes Feld enthält,
- Bestimmen (212) eines ersten Integritätscodes abhängig von den Daten des ersten Frames, wobei der Integritätscode abhängig von den Daten des ersten Frames und vom Wert des Abwärtszählers im zweiten Frame bestimmt wird.

5. Anwendungsserver eines weitreichenden Weitverkehrskommunikationsnetzes, wobei der Anwendungsserver **dadurch gekennzeichnet ist, dass** er geeignet ist, die Schritte des Verfahrens nach dem vorhergehenden Anspruch auszuführen.

6. System für ein weitreichendes Weitverkehrskommunikationsnetz, wobei das System mindestens eine elektronische Vorrichtung nach Anspruch 4 und einen Anwendungsserver nach Anspruch 5 enthält.

7. Computerprogramm, **dadurch gekennzeichnet, dass** es Anweisungen zur Durchführung eines Verfahrens (200) nach einem der Ansprüche 1 bis 2 durch einen Prozessor (301) einer elektronischen Vorrichtung (300) eines weitreichenden Weitverkehrskommunikationsnetzes enthält, wenn das Computerprogramm vom Prozessor ausgeführt wird.

8. Aufzeichnungsträger, der von einer elektronischen Vorrichtung (300) eines weitreichenden Weitverkehrskommunikationsnetzes lesbar ist, auf dem das Computerprogramm nach dem vorhergehenden Anspruch gespeichert ist.

## Claims

1. Method (200), for a long-range wide-area communication network comprising at least an electronic device and an application server, for acknowledging a frame transmitted by the electronic device and received by the application server, the method being executed by the electronic device and being **characterized in that** it comprises the steps of:
- transmitting (210), to the application server, a first frame, the first frame comprising data,
- receiving (214) a second frame, referred to as an acknowledgement frame, from the application server, the acknowledgement frame comprising a second integrity code, the received second frame furthermore comprising a field comprising a counter referred to as a descending counter,
- determining (212), depending on the data of the first frame, a first integrity code, the first integrity code being determined depending on the data of the first frame and on the descending-counter value received in the second frame,
- if the first integrity code determined by the electronic device and the second integrity code are the same (215), then validating (216) the acknowledgement by the application server of the first frame transmitted by the electronic device.

2. Method according to Claim 1, the step of determining, depending on the data of the transmitted first frame, a first integrity code comprising the steps of:
- following the transmission of the first frame, incrementing the value of a local descending counter associated with the number of frames transmitted by the application server in order to locally determine an expected value of the descending counter, and
- determining, depending on the data of the first frame and on the value of the local descending counter, the first integrity code.

3. Electronic device (300) suitable for being connected to a long-range wide-area communication network, the electronic device being **characterized in that** it is suitable for executing the steps of a method according to either one of the preceding claims.

4. Method (200), for a long-range wide-area communication network comprising at least an electronic device and an application server, for acknowledging a frame transmitted by the electronic device and received by the application server, the method being executed by the application server and being **characterized in that** it comprises the steps of:
- receiving (211), from the electronic device, a first frame, the first frame comprising data,
- transmitting (214) a second frame, referred to as an acknowledgement frame, from the application server, the acknowledgement frame comprising a second integrity code, the second frame furthermore comprising a field comprising a counter referred to as a descending counter,
- determining (212), depending on the data of the first frame, an integrity code, the integrity code being determined depending on the data of the first frame and the value of the descending counter in the second frame.

5. Application server of a long-range wide-area communication network, the application server being **characterized in that** it is suitable for executing the steps of the method according to the previous claim.

6. System for a long-range wide-area communication network, the system comprising at least an electronic device according to Claim 4 and an application server according to Claim 5.

7. Computer program, **characterized in that** it comprises instructions for implementing, by means of a processor (301) of an electronic device (300) of a long-range wide-area communication network, a method (200) according to either one of Claims 1 and 2 when the computer program is executed by the processor.

8. Storage medium, readable by an electronic device (300) of a long-range wide-area communication network, on which the computer program according to the preceding claim is stored.
